# EUROPÄISCHE PATENTANMELDUNG

(11) **EP 4 494 892 A1**
(43) Veröffentlichungstag der Anmeldung: **22.01.2025**
(21) Anmeldenummer: 24188415.4
(22) Anmeldetag: 12.07.2024
(51) Int. Cl.: B42D 25/29, B42D 25/355, B42D 25/36, B42D 25/45, D21H 19/16, D21H 19/24, D21H 21/42

(54) **WERTDOKUMENTSUBSTRAT**

(30) Priorität: 17.07.2023 DE 102023118871
(71) Anmelder: Giesecke+Devrient Currency Technology GmbH, 81677 München (DE)
(72) Erfinder: Seidler, Rudolf, 83703 Gmund am Tegernsee (DE); Mengel, Christoph, 81677 München (DE)
(74) Vertreter: Giesecke+Devrient IP

(57) **Zusammenfassung**

Die Erfindung betrifft ein Wertdokumentsubstrat, umfassend einen Fasersubstratkörper, der auf zumindest einer seiner Hauptflächen mit einer schmutzabweisenden Schicht versehen ist, dadurch gekennzeichnet, dass die schmutzabweisende Schicht aus einer im Wesentlichen auf nachhaltigen Rohstoffen basierenden Formulierung erhältlich ist und einen gemäß ASTM D6866, Methode B, bestimmbaren prozentualen Biomassenanteil in einem Bereich von 35 bis 100 aufweist und das Wertdokumentsubstrat bei der Durchführung eines Verschmutzungstests einen mit einem Spektralphotometer bestimmbaren Verschmutzungsgrad, ausgedrückt im Differenzwert der Helligkeit ΔL, in einem Bereich von 0 bis 40 aufweist.

## Beschreibung

Die Erfindung betrifft ein Wertdokumentsubstrat, insbesondere eine Banknote.

Wertdokumentsubstrate, insbesondere Banknoten, sind im Zuge des Wertdokumentumlaufs hohen Beanspruchungen ausgesetzt, was zu Verschmutzung und mechanischer Beschädigung führt. Mit Bezug auf eine Erhöhung der Umlaufbeständigkeit wird in der Druckschrift WO 2004/072378 A1 vorgeschlagen, Sicherheitspapier mit einer auf einem Lack basierenden Schutzschicht zu versehen. Die Druckschrift WO 2004/028825 A2 beschreibt die Bereitstellung eines gegenüber Verschmutzung verbesserten Sicherheitspapiers mit erhöhter mechanischer Festigkeit auf Basis eines mehrschichtigen Substrats, das zumindest eine Papierschicht und eine Folie umfasst.

Die im Stand der Technik eingeschlagenen Wege zur Bereitstellung von Wertdokumentsubstraten mit erhöhter Umlaufbeständigkeit sind mit dem Nachteil verbunden, dass die hierfür notwendigen Ausgangsmaterialien petrochemischen Ursprungs sind, was hinsichtlich des CO₂-Fussabdrucks, der Ökobilanz und der Nachhaltigkeit Schwierigkeiten aufwirft.

Der vorliegenden Erfindung liegt die Aufgabe zugrunde, die Nachteile des Standes der Technik zu überwinden und ein verbessertes Wertdokumentsubstrat bereitzustellen. Das Wertdokumentsubstrat soll insbesondere den Ersatz petrochemischer Rohmaterialien durch biogene, nachwachsende Rohstoffe gewährleisten und zugleich über eine hohe Umlaufbeständigkeit verfügen.

Die Aufgabe wird durch die im unabhängigen Anspruch definierte Merkmalskombination gelöst. Weiterbildungen der Erfindung sind Gegenstand der abhängigen Ansprüche.

### Zusammenfassung der Erfindung

Die Erfindung enthält ein Wertdokumentsubstrat, umfassend einen Fasersubstratkörper, der auf zumindest einer seiner Hauptflächen mit einer schmutzabweisenden Schicht versehen ist, dadurch gekennzeichnet, dass die schmutzabweisende Schicht aus einer im Wesentlichen auf nachhaltigen Rohstoffen basierenden Formulierung erhältlich ist und einen gemäß ASTM D6866, Methode B, bestimmbaren prozentualen Biomassenanteil in einem Bereich von 35 bis 100 aufweist und das Wertdokumentsubstrat bei der Durchführung eines Verschmutzungstests einen mit einem Spektralphotometer bestimmbaren Verschmutzungsgrad, ausgedrückt im Differenzwert der Helligkeit ΔL, in einem Bereich von 0 bis 40 aufweist.

In einer bevorzugten Ausgestaltung weist die schmutzabweisende Schicht einen gemäß ASTM D6866, Methode B, bestimmbaren prozentualen Biomassenanteil in einem Bereich von 35 bis 60 auf und das Wertdokumentsubstrat weist bei der Durchführung eines Verschmutzungstests einen mit einem Spektralphotometer bestimmbaren Verschmutzungsgrad, ausgedrückt im Differenzwert der Helligkeit ΔL, in einem Bereich von 0 bis 30, vorzugsweise in einem Bereich von 0 bis 15, auf.

Mit Vorteil weist die schmutzabweisende Schicht Bindemittel auf Basis von Polyurethanen und/oder Acrylaten auf.

In einer vorteilhaften Ausgestaltung weist der Fasersubstratkörper Nassfestmittel auf Basis von Polyamidoamin-Epichlorhydrin(PAAE)-Harzen und/oder Trockenfestmittel auf Basis von Carboxymethylcellulose und/oder Styrol-Butadien und/ oder Oberflächenleimungsmittel auf Basis von Polyvinylalkohol auf.

In einer weiteren vorteilhaften Ausgestaltung enthält die schmutzabweisende Schicht zusätzlich ein biozides Additiv, insbesondere ein fungizides, bakterizides und/ oder viruzides Additiv.

In einer vorteilhaften Ausgestaltung weist der Fasersubstratkörper Naturfasern auf, wobei die Naturfasern aus Pflanzen, gewählt von der Gruppe bestehend aus Hanf, Flachs, Zellstoff, Sisal oder einem Gemisch zweier oder mehrerer der vorstehend genannten Elemente gewonnen werden.

In einer ebenfalls vorteilhaften Ausgestaltung weist der Fasersubstratkörper biobasierte pflanzliche Polymerfasern auf, wobei die biobasierten pflanzlichen Polymerfasern biobasierte Polyamidfasern, Tencelfasern, TPU-Fasern, Rizinusfasern, Polylaktatfasern und/ oder Proteinfasern sind, wobei die Proteinfasern insbesondere aus Mais, Erdnuss, Milch und/oder Soja gewonnen werden.

Bevorzugt sind beide Hauptflächen des Fasersubstratkörpers jeweils mit der schmutzabweisenden Schicht versehen.

In einer vorteilhaften Erfindungsvariante ist der Fasersubstratkörper biologisch abbaubar und basiert auf nachhaltigen Fasern, wobei die nachhaltigen Fasern insbesondere von der Gruppe bestehend aus Naturfasern, regenerierten Cellulosefasern, biobasierten pflanzlichen Polymerfasern, biobasierten tierischen Polymerfasern oder einem Gemisch zweier oder mehrerer der vorstehend erwähnten Elemente gewählt sind.

In einer weiteren vorteilhaften Erfindungsvariante ist der Fasersubstratkörper ein mehrschichtiger Fasersubstratkörper mit Polymerlage/Papiersubstrat/Polymerlage-Aufbau oder Papiersubstrat/Polymerlage/Papiersubstrat-Aufbau, wobei die Polymerlage biologisch abbaubar ist und insbesondere von der Gruppe bestehend aus Cellulose, Polybutylenadipat-Terephthalat (BTA-Copolyester), Polylactid (PLA), insbesondere biaxial orientiertes Polylactid, Polyhydroxybutyrat (PHB), oder einem Gemisch zweier oder mehrerer der vorstehend genannten Elemente gewählt ist.

Mit besonderem Vorteil weist das Wertdokumentsubstrat einen Sicherheitsfaden und/oder einen Sicherheitsstreifen und/oder einen Sicherheitspatch auf Basis eines recyclierten oder biogenen Materials und/oder auf Naturfasern basierende Melierfasern auf.

Das Wertdokumentsubstrat ist insbesondere eine Banknote.

### Ausführliche Beschreibung der bevorzugten Ausführungsformen

Die im Stand der Technik bekannten Beschichtungen bzw. Imprägnierungen, mit denen Wertdokumente wie etwa Banknoten versehen sind, basieren auf Bausteinen petrochemischen Ursprungs. Der Erfindung liegt die Idee zugrunde, die Chemikalien petrochemischen Ursprungs durch nachwachsende Rohstoffe zu ersetzen. Es hat sich gezeigt, dass ein nachhaltiges Wertdokumentsubstrat mit zugleich hervorragender Schmutzabweisung und verbesserter Umlauffähigkeit bereitgestellt werden kann, indem ein Fasersubstratkörper auf zumindest einer seiner Hauptflächen mit einer schmutzabweisenden Schicht versehen wird, wobei die schmutzabweisende Schicht aus einer im Wesentlichen auf nachhaltigen Rohstoffen basierenden Formulierung erzeugt wird.

Die Schmutzabweisung kann experimentell über die Veränderung des Helligkeitswerts L vor und nach der Behandlung mit einer definierten Schmutzlösung in einer sogenannten Analysette, d.h. einer Vibrations-Siebmaschine, quantitativ bestimmt werden. Als Vibrations-Siebmaschine eignet sich z.B. die kommerziell bei der Firma Fritsch, Idar-Oberstein, erhältliche Vibrations-Siebmaschine "analysette 3 PRO". Der Verschmutzungstest erfolgt z.B. mit einem von der Firma Pröll erhältlichen Schmutz (der insbesondere auf getrocknetem und gemahlenem Torf, Quarzsand, Aktivkohle und Glycerin-1-monooleat basiert) und Glasperlen, Firma Mühlmeier, mit einem Durchmesser von 7 mm. Auf einer PVC-Folie mit einer Dicke von 200 µm wird das zu testende Wertdokumentsubstrat mit einer Größe von 17,5 cm x 7,5 cm mittels Klebeband fixiert, die PVC-Folie sodann auf den Siebboden der Vibrations-Siebmaschine gelegt. Man gibt 270 g Glasperlen hinzu und verteilt auf den Glasperlen 1,5 g der Schmutzmischung. Nach dem Verschließen der Vibrations-Siebmaschine wird das zu testende Wertdokumentsubstrat über einem Zeitraum von 20 min bei einer eingestellten Amplitude von 1,5 verschmutzt, d. h. einer Behandlung mit der Schmutzmischung unterzogen. Bevor das Wertdokumentsubstrat von der PVC-Folie abgenommen wird, muss der Schmutz mit Tissue-Papiertüchern, z.B. Kimwipes^{®} von der Firma Kimberly-Clark, abgewischt werden, bis kein merklicher Schmutz mehr an den Papiertüchern festzustellen ist. Der Verschmutzungsgrad, ausgedrückt im Differenzwert der Helligkeit ΔL, wird mittels eines Spektralphotometers, z.B. mittels des Geräts mit dem Markennamen ELREPHO 450X bestimmt.

Der Anteil an nachwachsenden Rohstoffen kann mittels der sogenannten C14-Methode bestimmt werden. Mittels der C14-Methode wird der Anteil an 14C-Isotopen eines organischen Materials bestimmt. Die Methode ist ein anerkanntes, sicheres und in Prüfnormen festgelegtes Verfahren, das sich in der Archäologie zur Altersbestimmung z.B. von Knochen bewährt hat. Die 14C-Aktivität gibt den Anteil an biobasiertem Kohlenstoff im jeweiligen Gegenstand in Prozent an. Für die Bestimmung des prozentualen Biomassenanteils eignet sich der Standard ASTM D6866, Methode B. Die Methode B verwendet die sogenannte Accelerator Mass Spectrometry (AMS) zusammen mit der sogenannten Isotope Ratio Mass Spectrometry (IRMS).

Gemäß der vorliegenden Erfindung ist die schmutzabweisende Schicht aus einer im Wesentlichen auf nachhaltigen Rohstoffen basierenden Formulierung erhältlich. Die im Wesentlichen auf nachhaltigen Rohstoffen basierende Formulierung weist vorzugsweise neben einem Lösungsmittel, insbesondere Wasser, im Wesentlichen Lackkomponenten und/oder chemische Additive mit einem hohen Anteil an biobasiertem Kohlenstoff auf. Die schmutzabweisende Schicht weist einen gemäß ASTM D6866, Methode B, bestimmbaren prozentualen Biomassenanteil in einem Bereich von 35 bis 100, vorzugsweise in einem Bereich von 35 bis 60, auf.

Das Wertdokumentsubstrat weist bei der Durchführung eines Verschmutzungstests einen mit einem Spektralphotometer (z.B. das Gerät mit dem Markennamen ELREPHO 450X) bestimmbaren Verschmutzungsgrad, ausgedrückt im Differenzwert der Helligkeit ΔL, in einem Bereich von 0 bis 40, bevorzugt in einem Bereich von 0 bis 30, weiter bevorzugt in einem Bereich von 0 bis 25 und insbesondere bevorzugt in einem Bereich von 0 bis 15 auf.

Der 14C-Anteil im Hinblick auf Lackkomponenten und chemische Additive aus regenerativen Rohstoffen ist umso größer, je höher der Anteil im jeweiligen Additiv, Bindemittel und dgl. ist und je mehr regenerativer Rohstoff eingesetzt wird. Sicherzustellen ist, dass die Umlauffähigkeit nicht durch den Ersatz petrochemischer Materialien durch nachwachsende Rohstoffe leidet. Zudem erzielt man mit größerem Materialeinsatz bis zu einer gewissen Sättigungsgrenze in der Regel Eigenschaften, die die Umlauffähigkeit, d.h. die Lebensdauer, des jeweiligen Wertdokuments wie etwa eine Banknote verlängern. Somit besteht eine positive Korrelation zwischen der Menge an regenerativ eingesetzten Komponenten, d.h. dem 14C-Gehalt, und der Umlauffähigkeit, d.h. der Lebensdauer, des jeweiligen Wertdokuments.

Die im Wesentlichen auf nachhaltigen Rohstoffen basierende Formulierung, aus der die schmutzabweisende Schicht erhältlich ist, umfasst vorzugsweise Bindemittel auf Basis von Polyurethanen und/ oder Bindemittel auf Basis von Acrylaten.

Die obigen Komponenten erwiesen sich ausgesprochen vorteilhaft im Hinblick auf Prüfgrößen wie die Reduktion des Cobb-Wertes, eine Reduktion der Porosität, eine geringe Öl- und Fettaufnahme und damit resultierend eine sehr gute Schmutzabweisung bei gleichzeitiger hervorragender Bedruckbarkeit und Farbhaftung.

Gemäß einer bevorzugten Ausführungsform enthält die schmutzabweisende Schicht zusätzlich ein biozides Additiv, insbesondere ein fungizides, bakterizides und/oder viruzides Additiv. Als biozides Additiv kann vorzugsweise ein Mittel eingesetzt werden, das von der Gruppe bestehend aus 1,2-Benzisothiazol-3(2H)-on (BIT), 3-Iod-2-propinylbutylcarbamat (IPBC), einer Silber enthaltenden Verbindung, einem Silbersalz wie etwa Silberphosphatglas und einer Kombination zweier oder mehrerer der vorstehend genannten Elemente gewählt ist. Als biozides Additiv kann des Weiteren ein Photosensibilisator zur Erzeugung von Singulettsauerstoff eingesetzt werden, siehe z.B. die aus der Druckschrift WO 2021/197663 A1 bekannten Photosensibilisatoren.

Weiterhin kann der Fasersubstratkörper bei Bedarf zusätzlich Naturfasern aufweisen, wobei die Naturfasern insbesondere aus Pflanzen, gewählt von der Gruppe bestehend aus Hanf, Flachs, Zellstoff, Sisal oder einem Gemisch zweier oder mehrerer der vorstehend genannten Elemente gewonnen werden können.

Gemäß einer weiteren bevorzugten Ausführungsform weist die schmutzabweisende Schicht zusätzlich biobasierte pflanzliche Polymerfasern auf, wobei die biobasierten pflanzlichen Polymerfasern biobasierte Polyamidfasern, Tencelfasern, TPU-Fasern (d.h. Fasern auf Basis von thermoplastischem Polyurethan, z.B. von der Firma Covestro), Rizinusfasern, Polylaktatfasern und/oder Proteinfasern sind, wobei die Proteinfasern insbesondere aus Mais, Erdnuss, Milch und/ oder Soja gewonnen werden.

Es wird bevorzugt, dass beide Hauptflächen des Fasersubstratkörpers jeweils mit der schmutzabweisenden Schicht versehen sind.

Gemäß einer bevorzugten Ausführungsform ist der Fasersubstratkörper größtenteils biologisch abbaubar und basiert auf nachhaltigen Fasern, wobei die nachhaltigen Fasern insbesondere von der Gruppe bestehend aus Naturfasern, regenerierten Cellulosefasern, biobasierten pflanzlichen Polymerfasern, biobasierten tierischen Polymerfasern oder einem Gemisch zweier oder mehrerer der vorstehend erwähnten Elemente gewählt sind.

Gemäß einer weiteren bevorzugten Ausführungsform ist der Fasersubstratkörper ein mehrschichtiger Fasersubstratkörper mit Polymerlage/Papiersubstrat/Polymerlage-Aufbau oder Papiersubstrat/Polymerlage/Papiersubstrat-Aufbau, wobei die Polymerlage biologisch abbaubar ist und insbesondere von der Gruppe bestehend aus Cellulose, Polybutylenadipat-Terephthalat (BTA-Copolyester), Polylactid (PLA), insbesondere biaxial orientiertes Polylactid, Polyhydroxybutyrat (PHB), oder einem Gemisch zweier oder mehrerer der vorstehend genannten Elemente gewählt ist.

Das erfindungsgemäß Wertdokumentsubstrat kann vorzugsweise einen Sicherheitsfaden und/oder einen Sicherheitsstreifen und/oder einen Sicherheitspatch auf Basis eines biologisch abbaubaren Materials und/oder auf Naturfasern basierende Melierfasern aufweisen.

Das erfindungsgemäße Wertdokumentsubstrat ist insbesondere eine Banknote oder ein zur Herstellung von Banknoten geeignetes Sicherheitspapier.

Weitere Ausführungsbeispiele sowie Vorteile der Erfindung werden nachfolgend anhand der Figur erläutert, bei deren Darstellung auf eine maßstabs- und proportionsgetreue Wiedergabe verzichtet wurde, um die Anschaulichkeit zu erhöhen.

Es zeigt:

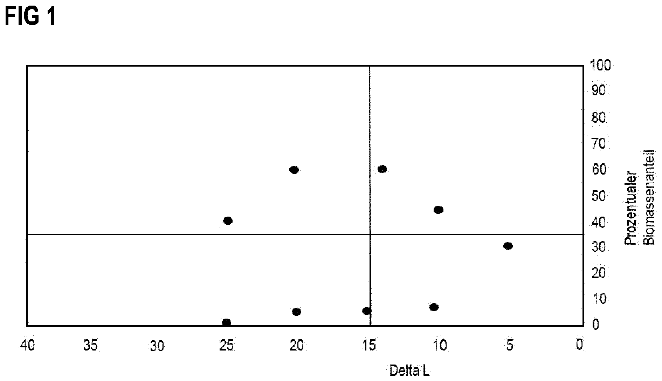

Figur 1 eine Auftragung des gemäß ASTM D6866, Methode B, bestimmten prozentualen Biomassenanteils der schmutzabweisenden Schicht bezogen auf den mit einem Spektralphotometer (ELREPHO 450X) bestimmten Verschmutzungsgrad, ausgedrückt im Differenzwert der Helligkeit ΔL, wobei die Messungen an einzelnen Wertdokumentsubstraten vorgenommen wurden.

### Ausführungsbeispiel 1:

Eine für die Erzeugung einer schmutzabweisenden Schicht geeignete Formulierung auf Basis von PU-Bindemitteln (sogenannte "Green LPT"-Formulierung), die im Wesentlichen auf nachhaltigen Rohstoffen basiert, weist die folgenden Bestandteile auf:
- 97 Teile "NuVera D RU-94-227" (Firma Stahl Chemie, Biomassenanteil 66%, aus Zucker);
- 3 Teile "Desmodur 2802" (Firma Covestro);
- 100 Teile Wasser.

### Ausführungsbeispiel 2:

Eine für die Erzeugung einer schmutzabweisenden Schicht geeignete Formulierung auf Basis von Polyacrylaten (sogenannte "Green LL"-Formulierung), die im Wesentlichen auf nachhaltigen Rohstoffen basiert, weist die folgenden Bestandteile auf:
- 95 Teile "Decovery SP 7450" (Firma Covestro, Biomassenanteil 39%);
- 5 Teile "NeoAdd Pax 523" (Firma Covestro);
- 35 Teile Wasser.

### Ausführungsbeispiel 3:

Eine für die Erzeugung einer schmutzabweisenden Schicht geeignete Formulierung wurde durch Kombinieren der im Ausführungsbeispiel 1 beschriebenen "Green LPT"-Formulierung und der im Ausführungsbeispiel 2 beschriebenen "Green LL"-Formulierung hergestellt.

### Vergleichsbeispiel 1:

Eine für die Erzeugung einer schmutzabweisenden Schicht geeignete Formulierung (sogenannte "Standard LL"-Formulierung), die nicht auf nachhaltigen Rostoffen basiert, weist die folgenden Bestandteile auf:
- 61,8 Teile NeoCryl 2092 (Firma Covestro);
- 4,6 Teile Aquacer 9 RC 1452 (Firma Byk);
- 3,0 Teile Permutex XR 2500 (Firma Stahl);
- 30,6 Teile Wasser.

### Vergleichsbeispiel 2:

Eine für die Erzeugung einer schmutzabweisenden Schicht geeignete Formulierung (sogenannte "Standard LPT"-Formulierung), die nicht auf nachhaltigen Rostoffen basiert, weist die folgenden Bestandteile auf:
- 32,5 Teile Liopur 2004-140 (Firma Synthopol);
- 0,15 Teile Glycerin;
- 0,05 Teile Byk 1640 (Firma Byk);
- 0,8 Teile Desmodur 2802 (Firma Covestro);
- 66,5 Teile Wasser.

### Vergleichsbeispiel 3:

Eine für die Erzeugung einer schmutzabweisenden Schicht geeignete Formulierung, die nicht auf nachhaltigen Rostoffen basiert, wurde durch Kombinieren der im Vergleichsbeispiel 1 beschriebenen "Standard LL"-Formulierung und der im Vergleichsbeispiel 2 beschriebenen "Standard LPT"-Formulierung hergestellt.

### Herstellung erfindungsgemäßer und nicht erfindungsgemäßer Wertdokumentsubstrate, Messung von Helligkeitswerten (Delta-L-Werte) nach Schmutzbehandlung einzelner Wertdokumentsubstrate sowie Bestimmung des prozentualen Biomassenanteils der jeweiligen schmutzabweisenden Schicht:

Wertdokumentsubstrate, in den vorliegenden Beispielen jeweils ein zur Herstellung einer Banknote geeignetes Papiersubstrat, wurden auf beiden Hauptflächen jeweils vollflächig mit einer schmutzabweisenden Schicht versehen.

Wertdokumentsubstrat 1 (erfindungsgemäß): Zur Herstellung der schmutzabweisenden Schicht diente die Formulierung gemäß Ausführungsbeispiel 3.

Wertdokumentsubstrat 2 (erfindungsgemäß): Zur Herstellung der schmutzabweisenden Schicht diente die Formulierung gemäß Ausführungsbeispiel 2.

Wertdokumentsubstrat 3 (nicht erfindungsgemäß): Zur Herstellung der schmutzabweisenden Schicht diente die Formulierung gemäß Vergleichsbeispiel 3.

Wertdokumentsubstrat 4 (nicht erfindungsgemäß): Zur Herstellung der schmutzabweisenden Schicht diente die Formulierung gemäß Vergleichsbeispiel 1.

Insgesamt erfolgte die Herstellung von neun Wertdokumentsubstraten, nämlich zweimal unabhängig voneinander die Herstellung eines erfindungsgemäßen Wertdokumentsubstrats gemäß dem obigen "Wertdokumentsubstrat 1", zweimal unabhängig voneinander die Herstellung eines erfindungsgemäßen Wertdokumentsubstrats gemäß dem obigen "Wertdokumentsubstrat 2", dreimal unabhängig voneinander die Herstellung eines nicht erfindungsgemäßen Wertdokumentsubstrats gemäß dem obigen "Wertdokumentsubstrat 4" und zweimal unabhängig voneinander die Herstellung eines nicht erfindungsgemäßen Wertdokumentsubstrats gemäß dem obigen "Wertdokumentsubstrat 3".

Die hergestellten Wertdokumentsubstrate wurden einzeln einer Schmutzbehandlung unterzogen und anschließend mittels einer Analysette bzw. Vibrationssiebmaschine analysiert. Dabei wurde jeweils der Helligkeitswert (Delta-L-Wert) des Wertdokumentsubstrats gemessen.

Die Figur 1 veranschaulicht die Auftragung des gemäß ASTM D6866, Methode B, bestimmten prozentualen Biomassenanteils der schmutzabweisenden Schicht bezogen auf den mit einem Spektralphotometer (ELREPHO 450X) bestimmten Verschmutzungsgrad, ausgedrückt im Differenzwert der Helligkeit ΔL, wobei die Messungen für die neun Wertdokumentsubstrate nach Schmutzbehandlung vorgenommen wurden.

Die Figur 1 zeigt vier Quadranten:
- Quadrant rechts-oben: Messpunkte für zwei unabhängig voneinander hergestellte, erfindungsgemäße Wertdokumentsubstrats gemäß dem obigen "Wertdokumentsubstrat 1";
- Quadrant links-oben: Messpunkte für zwei unabhängig voneinander hergestellte, erfindungsgemäße Wertdokumentsubstrats gemäß dem obigen "Wertdokumentsubstrat 2";
- Quadrant links-unten: Messpunkte für drei unabhängig voneinander hergestellte, nicht erfindungsgemäße Wertdokumentsubstrats gemäß dem obigen "Wertdokumentsubstrat 4";
- Quadrant rechts-unten: Messpunkte für zwei unabhängig voneinander hergestellte, nicht erfindungsgemäße Wertdokumentsubstrats gemäß dem obigen "Wertdokumentsubstrat 3".

## Patentansprüche

1. Wertdokumentsubstrat, umfassend einen Fasersubstratkörper, der auf zumindest einer seiner Hauptflächen mit einer schmutzabweisenden Schicht versehen ist, **dadurch gekennzeichnet, dass** die schmutzabweisende Schicht aus einer im Wesentlichen auf nachhaltigen Rohstoffen basierenden Formulierung erhältlich ist und einen gemäß ASTM D6866, Methode B, bestimmbaren prozentualen Biomassenanteil in einem Bereich von 35 bis 100 aufweist und das Wertdokumentsubstrat bei der Durchführung eines Verschmutzungstests einen mit einem Spektralphotometer bestimmbaren Verschmutzungsgrad, ausgedrückt im Differenzwert der Helligkeit ΔL, in einem Bereich von 0 bis 40 aufweist.

2. Wertdokumentsubstrat nach Anspruch 1, wobei die schmutzabweisende Schicht einen gemäß ASTM D6866, Methode B, bestimmbaren prozentualen Biomassenanteil in einem Bereich von 35 bis 60 aufweist und das Wertdokumentsubstrat bei der Durchführung eines Verschmutzungstests einen mit einem Spektralphotometer bestimmbaren Verschmutzungsgrad, ausgedrückt im Differenzwert der Helligkeit ΔL, in einem Bereich von 0 bis 30, vorzugsweise in einem Bereich von 0 bis 15, aufweist.

3. Wertdokumentsubstrat nach Anspruch 1 oder 2, wobei die schmutzabweisende Schicht Bindemittel auf Basis von Polyurethanen und/ oder Acrylaten aufweist.

4. Wertdokumentsubstrat nach Anspruch 1, 2 oder 3, wobei der Fasersubstratkörper Nassfestmittel auf Basis von Polyamidoamin-Epichlorhydrin(PAAE)-Harzen und/oder Trockenfestmittel auf Basis von Carboxymethylcellulose und/ oder Styrol-Butadien und/ oder Oberflächenleimungsmittel auf Basis von Polyvinylalkohol aufweist.

5. Wertdokumentsubstrat nach einem der Ansprüche 1 bis 4, wobei die schmutzabweisende Schicht zusätzlich ein biozides Additiv, insbesondere ein fungizides, bakterizides und/ oder viruzides Additiv, enthält.

6. Wertdokumentsubstrat nach einem der Ansprüche 1 bis 5, wobei der Fasersubstratkörper Naturfasern aufweist, wobei die Naturfasern aus Pflanzen, gewählt von der Gruppe bestehend aus Hanf, Flachs, Zellstoff, Sisal oder einem Gemisch zweier oder mehrerer der vorstehend genannten Elemente gewonnen werden.

7. Wertdokumentsubstrat nach einem der Ansprüche 1 bis 6, wobei der Fasersubstratkörper biobasierte pflanzliche Polymerfasern aufweist, wobei die biobasierten pflanzlichen Polymerfasern biobasierte Polyamidfasern, Tencelfasern, TPU-Fasern, Rizinusfasern, Polylaktatfasern und/oder Proteinfasern sind, wobei die Proteinfasern insbesondere aus Mais, Erdnuss, Milch und/oder Soja gewonnen werden.

8. Wertdokumentsubstrat nach einem der Ansprüche 1 bis 7, wobei beide Hauptflächen des Fasersubstratkörpers jeweils mit der schmutzabweisenden Schicht versehen sind.

9. Wertdokumentsubstrat nach einem der Ansprüche 1 bis 5, wobei der Fasersubstratkörper biologisch abbaubar ist und auf nachhaltigen Fasern basiert, wobei die nachhaltigen Fasern insbesondere von der Gruppe bestehend aus Naturfasern, regenerierten Cellulosefasern, biobasierten pflanzlichen Polymerfasern, biobasierten tierischen Polymerfasern oder einem Gemisch zweier oder mehrerer der vorstehend erwähnten Elemente gewählt sind.

10. Wertdokumentsubstrat nach einem der Ansprüche 1 bis 9, wobei der Fasersubstratkörper ein mehrschichtiger Fasersubstratkörper mit Polymerlage/Papiersubstrat/Polymerlage-Aufbau oder Papiersubstrat/Polymerlage/Papiersubstrat-Aufbau ist, wobei die Polymerlage biologisch abbaubar ist und insbesondere von der Gruppe bestehend aus Cellulose, Polybutylenadipat-Terephthalat (BTA-Copolyester), Polylactid (PLA), insbesondere biaxial orientiertes Polylactid, Polyhydroxybutyrat (PHB), oder einem Gemisch zweier oder mehrerer der vorstehend genannten Elemente gewählt ist.

11. Wertdokumentsubstrat nach einem der Ansprüche 1 bis 10, wobei das Wertdokumentsubstrat einen Sicherheitsfaden und/oder einen Sicherheitsstreifen und/oder einen Sicherheitspatch auf Basis eines recyclierten oder biogenen Materials und/ oder auf Naturfasern basierende Melierfasern aufweist.

12. Wertdokumentsubstrat nach einem der Ansprüche 1 bis 11, wobei das Wertdokumentsubstrat eine Banknote ist.
